# EUROPEAN PATENT APPLICATION

(11) **EP 4 152 548 A1**
(43) Date of publication of application: **22.03.2023**
(21) Application number: 20938597.0
(22) Date of filing: 01.06.2020
(51) Int. Cl.: H02J 3/38

(54) **FAULT PROTECTION APPARATUS**

(71) Applicant: Huawei Digital Power Technologies Co., Ltd., Shenzhen, Guangdong 518043 (CN)
(72) Inventor: CHEN, Dong, Shenzhen, Guangdong 518129 (CN); GAO, Yongbing, Shenzhen, Guangdong 518129 (CN); SHI, Lei, Shenzhen, Guangdong 518129 (CN); WANG, Xun, Shenzhen, Guangdong 518129 (CN)
(74) Representative: Maiwald GmbH
(86) International application number: PCT/CN2020/093669
(87) International publication number: WO 2021/243501

(57) **Abstract**

Embodiments of this application provide a fault protection apparatus, to reduce costs of a power system while ensuring safety and reliability of the power system based on a common direct current bus. The fault protection apparatus includes: a first diode, a first switch component, a control unit, a first port, a second port, a third port, a fourth port, and a fifth port. The first port is connected to a positive common direct current bus of the common direct current bus. The second port is connected to a negative common direct current bus of the common direct current bus. The third port is connected to a positive local bus of a branch on which the fault protection apparatus is located. The fourth port is connected to a negative local bus of the branch on which the fault protection apparatus is located. One side of the fifth port is connected to a control terminal of the first switch component. The first diode and the first switch component are connected to the power system through the first port, the second port, the third port, and the fourth port. The other side of the fifth port is connected to the control unit. The control unit sends a drive signal to control the first switch component.

## Description

### TECHNICAL FIELD

This application relates to a power system, and in particular, to a fault protection apparatus.

### BACKGROUND

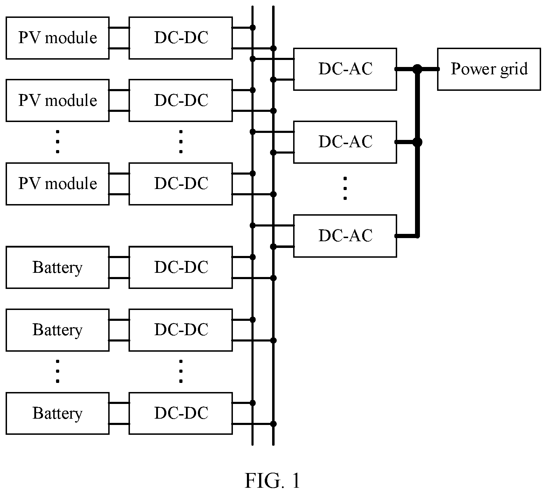

With vigorous development of new energy, a photovoltaic energy storage system based on a common direct current bus shown in FIG. 1 is widely applied to scenarios such as a ground power station, a commercial factory, and a residential user. The photovoltaic energy storage system can improve utilization efficiency of a power generation capability of a photovoltaic module, and supply smooth and reliable electric energy to a power grid, thereby improving economic benefits of an entire power system.

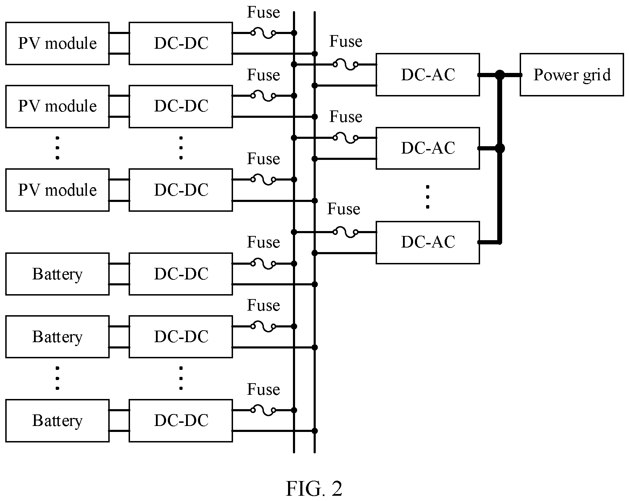

However, in an actual installation and operation process of the power system, due to natural or human factors, an exception such as an overcurrent or a short circuit may occur on an electrical device or a cable in the power system, which causes a threat to the power system or personnel. To ensure reliability of the photovoltaic energy storage system, a protection apparatus shown in FIG. 2 is provided. In the photovoltaic energy storage system, the protection apparatus includes a fuse. A positive local bus of each group of direct current-direct current (DC-DC) converters is connected to a positive common direct current bus through a corresponding fuse. A positive local bus of each group of direct current-alternating current (DC-AC) converters is connected to a positive common direct current bus through a corresponding fuse. Other parts of the photovoltaic energy storage system have the same configuration and connection relationship as a basic photovoltaic energy storage system based on a common direct current bus. When an abnormal fault such as an overcurrent or a short circuit occurs in one of a plurality of groups of photovoltaic modules, a plurality of groups of batteries, a plurality of DC-DC converters, or a plurality of groups of DC-AC converters, a current of a corresponding branch continuously increases. As a result, a corresponding fuse is blown, and finally the faulty branch is disconnected from the common direct current bus. This ensures safe operation of the common direct current bus and another normal device connected to the common direct current bus. When an abnormal fault such as a short circuit occurs on the common direct current bus, currents on each group of branches continuously increase. As a result, a corresponding fuse is blown, and finally the branch is disconnected from the common direct current bus. This ensures that a normal device on the branch is not damaged. That is, when the abnormal fault occurs in the system, the fuse provides a protection function.

However, in the system shown in FIG. 2, when an abnormal fault such as an overcurrent or a short circuit occurs in a group of branches on the common direct current bus of the system, currents of other branches on the common direct current bus are converged on the faulty branch. A current flowing through a fuse of the branch is a sum of the currents of the other branches, and is close to a total current of the system. Therefore, a specification of each fuse needs to be designed based on a total capacity of the system, and a capacity specification of the fuse is large. As a result, it is difficult to select the fuse, fuse costs are increased, and system costs are increased.

### SUMMARY

Embodiments of this application provide a fault protection apparatus, to reduce costs of a power system while ensuring safety and reliability of the power system based on a common direct current bus.

A first aspect of embodiments of this application provides a fault protection apparatus. The fault protection apparatus is applied to a power system based on a common direct current bus. The fault protection apparatus specifically includes: a first diode, a first switch component, and a control unit. When the first diode is forward conducted, the common direct current bus supplies power to a branch on which the fault protection apparatus is located. When the control unit controls the first switch component to be forward conducted, the branch on which the fault protection apparatus is located supplies energy to the common direct current bus. When the first diode is reversely cut off, and the control unit controls the first switch component to be forward cut off, the branch is disconnected from the common direct current bus. Another device on the branch on which the fault protection apparatus is located is connected to the common direct current bus by using the fault protection apparatus.

In this embodiment, the fault protection apparatus specifically further includes a first port, a second port, a third port, a fourth port, and a fifth port. Therefore, a possible connection relationship between the fault protection apparatus and the common direct current bus and the control unit is as follows: One side of the first port is connected to a positive common direct current bus of the common direct current bus. The second port is connected to a negative common direct current bus of the common direct current bus. One side of the third port is connected to a positive local bus of the branch on which the fault protection apparatus is located. The fourth port is connected to a negative local bus of the branch on which the fault protection apparatus is located. One side of the fifth port is connected to a control terminal of the first switch component, and the other side of the fifth port is connected to the control unit. The first diode and the first switch component are connected to the power system through the first port, the second port, the third port, and the fourth port. The control unit sends a drive signal to control the first switch component. The control unit detects a current in a circuit. When the current exceeds a normal range, the control unit stops sending the drive signal to the fifth port. When the current is within a normal range, the control unit sends the drive signal to the fifth port. In this structure, when a voltage between the third port and the fourth port is lower than a voltage between the first port and the second port, the first diode is forward conducted. In this case, the common direct current bus supplies power to the branch. When a voltage between the third port and the fourth port is higher than a voltage between the first port and the second port, and the fifth port receives the drive signal (that is, the current is within the normal range), the first diode is reversely cut off, and the first switch component is forward conducted. In this case, the branch supplies power to the common direct current bus. When a voltage between the third port and the fourth port is higher than a voltage between the first port and the second port, and the fifth port does not receive the drive signal (that is, the current exceeds the normal range), the first diode is reversely cut off, and the first switch component is forward cut off. In this case, the branch is disconnected from the common direct current bus.

In this embodiment, when the current of the branch exceeds the normal range, the diode and the switch component on the branch are cut off, so that the branch on which the diode and the switch component are located is disconnected from the common direct current bus, to ensure safety of the common direct current bus or the device on the branch, so as to implement fault protection for the power system. In addition, costs of the diode and the switch component are low, and the diode and the switch component are not damaged when a fault protection function is performed. After fault recovery, only a faulty device needs to be maintained, and not all fault protection apparatuses need to be maintained. Therefore, costs of the power system are reduced.

Optionally, to improve a capability of the fault protection apparatus to withstand an overcurrent or a short-circuit current, the first diode may include a plurality of diodes connected in parallel. In addition, the first switch component may also include a plurality of switch components connected in parallel.

Optionally, the first switch component may be an insulated gate bipolar transistor (Insulated Gate Bipolar Transistor, IGBT) or a metal-oxide semiconductor effect transistor (Metal-Oxide-Semiconductor Field-Effect Transistor, MOSFET). In this way, a range of available switch components can be increased, to reduce processing difficulty and reduce costs.

Optionally, when the first switch component is the MOSFET, a body diode in the MOSFET may be used as the first diode, that is, in the fault protection apparatus, no additional diode may be added to the MOSFET; or a body diode in the MOSFET is used as a diode in the first diode, that is, an independent diode is additionally connected in parallel to the MOSFET, and the body diode and the independent diode are used as the first diode.

Optionally, the first diode and the first switch component are connected between the positive local bus of the branch on which the fault protection apparatus is located and the positive common direct current bus of the common direct current bus, or the first diode and the first switch component are connected between the negative local bus of the branch on which the fault protection apparatus is located and the negative common direct current bus of the common direct current bus. When the fault protection apparatus includes the first port, the second port, the third port, the fourth port, and the fifth port, the connection relationship is specifically as follows:

In a possible implementation, the first diode and the first switch component are connected to the positive common direct current bus and the positive local bus. Specifically, an anode of the first diode is connected to the first port, a cathode of the first diode is connected to the third port, an emitter of the IGBT or a source of the MOSFET is connected to the first port, a collector of the IGBT or a drain of the MOSFET is connected to the third port, and the second port is connected to the fourth port.

In another possible implementation, the first diode and the first switch component are connected to the negative common direct current bus and the negative local bus. Specifically, an anode of the first diode is connected to the fourth port, a cathode of the first diode is connected to the second port, an emitter of the IGBT or a source of the MOSFET is connected to the fourth port, a collector of the IGBT or a drain of the MOSFET is connected to the second port, and the first port is connected to the third port.

In this way, the fault protection apparatus can be flexibly connected to meet different requirements, so as to protect the power system more comprehensively.

Optionally, a first capacitor is connected in parallel between a positive common direct current bus and a negative common direct current bus that are connected to the branch on which the fault protection apparatus is located. Alternatively, a second capacitor is connected in parallel between a positive local direct current bus and a negative local direct current bus of the branch on which the fault protection apparatus is located. Alternatively, a first capacitor is connected in parallel between a positive common direct current bus and a negative common direct current bus that are connected to the branch on which the fault protection apparatus is located, and a second capacitor is connected in parallel between a positive local direct current bus and a negative local direct current bus of the branch on which the fault protection apparatus is located. In a possible implementation, a first capacitor is further connected in parallel between the first port and the second port. Alternatively, a second capacitor is connected in parallel between the third port and the fourth port. Alternatively, a first capacitor is connected in parallel between the first port and the second port, and a second capacitor is connected in parallel between the third port and the fourth port. In this way, the capacitor is connected in parallel between the local buses, so that an inrush current of the fault protection apparatus during power-on can be reduced. The capacitor is connected in parallel between the common direct current buses, so that a surge current of the fault protection apparatus can be suppressed. This improves safety and reliability of the fault protection apparatus.

According to a second aspect, an embodiment of this application provides a fault protection apparatus. The fault protection apparatus is applied to a power system based on a common direct current bus, and specifically includes a second diode, a sixth port, a seventh port, an eighth port, and a ninth port. The sixth port is connected to a positive common direct current bus of the common direct current bus. The seventh port is connected to a negative common direct current bus of the common direct current bus. The eighth port is connected to a positive local bus of a branch on which the fault protection apparatus is located. The ninth port is connected to a negative local bus of the branch on which the fault protection apparatus is located. The second diode is connected to the power system through the sixth port, the seventh port, the eighth port, and the ninth port. When a voltage between the eighth port and the ninth port is lower than a voltage between the sixth port and the seventh port, the second diode is forward conducted. When a voltage between the eighth port and the ninth port is higher than a voltage between the sixth port and the seventh port, the second diode is reversely cut off.

In this embodiment, the fault protection apparatus may be used for a branch that needs to operate only when the common direct current bus supplies electric energy to the local bus. In this way, a circuit structure and control are further simplified on the premise of protecting reliability of the power system, to reduce costs of the power system.

Optionally, there may be the following several possible implementations in which the second diode is connected to the power system through the sixth port, the seventh port, the eighth port, and the ninth port.

In a possible implementation, the second diode is connected to the positive common direct current bus and the positive local bus. Specifically, an anode of the second diode is connected to the sixth port, a cathode of the second diode is connected to the eighth port, and the seventh port is connected to the ninth port.

In another possible implementation, the second diode is connected to the negative common direct current bus and the negative local bus. Specifically, an anode of the second diode is connected to the ninth port, a cathode of the second diode is connected to the seventh port, and the sixth port is connected to the eighth port.

In this way, the fault protection apparatus can be flexibly connected to meet different requirements, so as to protect the power system more comprehensively.

Optionally, to improve a capability of withstanding an overcurrent or a short-circuit current in the power system, the second diode may include a plurality of diodes connected in parallel.

Optionally, a third capacitor is connected in parallel between the sixth port and the seventh port. Alternatively, a fourth capacitor is connected in parallel between the eighth port and the ninth port. Alternatively, a third capacitor is connected in parallel between the sixth port and the seventh port, and a fourth capacitor is connected in parallel between the eighth port and the ninth port. In this way, the capacitor is connected in parallel between the local buses, so that an inrush current of the fault protection apparatus during power-on can be reduced. The capacitor is connected in parallel between the common direct current buses, so that a surge current of the fault protection apparatus can be suppressed. This improves safety and reliability of the fault protection apparatus.

According to a third aspect, an embodiment of this application provides a photovoltaic system. The photovoltaic system is a power system based on a common direct current bus, and specifically includes a common direct current bus, a plurality of first fault protection apparatuses, a plurality of first direct current source units, and a plurality of first inverter units. A branch on which the first direct current source unit or the first inverter unit is located is connected to the common direct current bus by using the first fault protection apparatus. The first fault protection apparatus includes a first diode, a first switch component, and a control unit. When the first diode is forward conducted, the common direct current bus supplies power to the branch. When the control unit controls the first switch component to be forward conducted, the branch supplies energy to the common direct current bus. When the first diode is reversely cut off, and the control unit controls the first switch component to be forward cut off, the branch is disconnected from the common direct current bus.

In this embodiment, the common direct current bus includes a positive common direct current bus and a negative common direct current bus. The first fault protection apparatus may further include a first port, a second port, a third port, a fourth port, and a fifth port. Therefore, a possible connection manner between the first fault protection apparatus and the common direct current bus, the first direct current source unit, and the first inverter unit is as follows: One side of the first port is connected to the positive common direct current bus of the common direct current bus. The second port is connected to the negative common direct current bus of the common direct current bus. One side of the third port is connected to a positive local bus of a branch on which the fault protection apparatus is located. The fourth port is connected to a negative local bus of the branch on which the fault protection apparatus is located. One side of the fifth port is connected to a control terminal of the first switch component, and the other side of the fifth port is connected to the control unit. The first diode and the first switch component are connected to the power system through the first port, the second port, the third port, and the fourth port. The control unit sends a drive signal to control the first switch component. The control unit detects a current in a circuit. When the current exceeds a normal range, the control unit stops sending the drive signal to the fifth port. When the current is within a normal range, the control unit sends the drive signal to the fifth port. In this structure, when a voltage between the third port and the fourth port is lower than a voltage between the first port and the second port, the first diode is forward conducted. In this case, the common direct current bus supplies power to the branch. When a voltage between the third port and the fourth port is higher than a voltage between the first port and the second port, and the fifth port receives the drive signal (that is, the current is within the normal range), the first diode is reversely cut off, and the first switch component is forward conducted. In this case, the branch supplies power to the common direct current bus. When a voltage between the third port and the fourth port is higher than a voltage between the first port and the second port, and the fifth port does not receive the drive signal (that is, the current exceeds the normal range), the first diode is reversely cut off, and the first switch component is forward cut off. In this case, the branch is disconnected from the common direct current bus. One side of the first direct current source unit is connected to the third port and the fourth port of the first fault protection apparatus located on a same branch as the first direct current source unit. One side of the first inverter unit is connected to the third port and the fourth port of the first fault protection apparatus located on a same branch as the first inverter unit.

In this embodiment, when the current of the branch exceeds the normal range, the diode and the switch component on the branch are cut off, so that the branch on which the diode and the switch component are located is disconnected from the common direct current bus, to ensure safety of the common direct current bus or the device on the branch, so as to implement fault protection for the power system. In addition, costs of the diode and the switch component are low, and the diode and the switch component are not damaged when a fault protection function is performed. After fault recovery, only a faulty device needs to be maintained, and not all fault protection apparatuses need to be maintained. Therefore, costs of the power system are reduced.

Optionally, to improve a capability of the circuit to withstand an overcurrent or a short-circuit current, the first diode may include a plurality of diodes connected in parallel. In addition, the first switch component may also include a plurality of switch components connected in parallel.

Optionally, the first switch component may be an insulated gate bipolar transistor (Insulated Gate Bipolar Transistor, IGBT) or a metal-oxide semiconductor effect transistor (Metal-Oxide-Semiconductor Field-Effect Transistor, MOSFET). In this way, a range of available switch components can be increased, to reduce processing difficulty and reduce costs.

Optionally, when the first switch component is the MOSFET, a body diode in the MOSFET may be used as the first diode, that is, in the fault protection apparatus, no additional diode may be added to the MOSFET; or a body diode in the MOSFET is used as a diode in the first diode, that is, an independent diode is additionally connected in parallel to the MOSFET, and the body diode and the independent diode are used as the first diode.

Optionally, the first diode and the first switch component are connected between the positive local bus of the branch on which the fault protection apparatus is located and the positive common direct current bus of the common direct current bus, or the first diode and the first switch component are connected between the negative local bus of the branch on which the fault protection apparatus is located and the negative common direct current bus of the common direct current bus. When the fault protection apparatus includes the first port, the second port, the third port, the fourth port, and the fifth port, and the first switch component is the IGBT or the MOSFET, the connection relationship is specifically as follows:

In a possible implementation, an anode of the first diode is connected to the first port, a cathode of the first diode is connected to the third port, an emitter of the IGBT or a source of the MOSFET is connected to the first port, a collector of the IGBT or a drain of the MOSFET is connected to the third port, and the second port is connected to the fourth port.

In another possible implementation, an anode of the first diode is connected to the fourth port, a cathode of the first diode is connected to the second port, an emitter of the IGBT or a source of the MOSFET is connected to the fourth port, a collector of the IGBT or a drain of the MOSFET is connected to the second port, and the first port is connected to the third port.

In this way, the fault protection apparatus can be flexibly connected to meet different requirements, so as to protect the power system more comprehensively.

Optionally, a first capacitor is connected in parallel between a positive common direct current bus and a negative common direct current bus that are connected to the branch on which the fault protection apparatus is located. Alternatively, a second capacitor is connected in parallel between a positive local direct current bus and a negative local direct current bus of the branch on which the fault protection apparatus is located. Alternatively, a first capacitor is connected in parallel between a positive common direct current bus and a negative common direct current bus that are connected to the branch on which the fault protection apparatus is located, and a second capacitor is connected in parallel between a positive local direct current bus and a negative local direct current bus of the branch on which the fault protection apparatus is located. In a possible implementation, a first capacitor is further connected in parallel between the first port and the second port. Alternatively, a second capacitor is connected in parallel between the third port and the fourth port. Alternatively, a first capacitor is connected in parallel between the first port and the second port, and a second capacitor is connected in parallel between the third port and the fourth port. In this way, the capacitor is connected in parallel between the local buses, so that an inrush current of the fault protection apparatus during power-on can be reduced. The capacitor is connected in parallel between the common direct current buses, so that a surge current of the fault protection apparatus can be suppressed. This improves safety and reliability of the fault protection apparatus.

Optionally, the photovoltaic system may further include a plurality of second fault protection apparatuses, a plurality of second direct current source units, and a plurality of second inverter units. The second fault protection apparatus includes a second diode. A branch on which the second direct current source unit is located or a branch on which the second inverter unit is located is connected to the common direct current bus by using the second fault protection apparatus. When the second diode is forward conducted, the common direct current bus supplies power to the branch. When the second diode is reversely cut off, a branch on which the second diode is located is disconnected from the common direct current bus.

In this embodiment, the second fault protection apparatus further includes a sixth port, a seventh port, an eighth port, and a ninth port. The sixth port is connected to the positive common direct current bus of the common direct current bus. The seventh port is connected to the negative common direct current bus of the common direct current bus. The eighth port is connected to a positive local bus of a branch on which the fault protection apparatus is located. The ninth port is connected to a negative local bus of the branch on which the fault protection apparatus is located. The second diode is connected to the power system through the sixth port, the seventh port, the eighth port, and the ninth port. When a voltage between the eighth port and the ninth port is lower than a voltage between the sixth port and the seventh port, the second diode is forward conducted. When a voltage between the eighth port and the ninth port is higher than a voltage between the sixth port and the seventh port, the second diode is reversely cut off. One side of the second direct current source unit is connected to the eighth port and the ninth port of the second fault protection apparatus located on a same branch as the second direct current source unit. One side of the second inverter unit is connected to the eighth port and the ninth port of the second fault protection apparatus located on a same branch as the second inverter unit.

In this embodiment, the fault protection apparatus may be used for a branch that needs to operate only when the common direct current bus supplies electric energy to the local bus. In this way, a circuit structure and control are further simplified on the premise of protecting reliability of the power system, to reduce costs of the power system.

Optionally, the second fault protection apparatus is connected between a positive local bus of the branch on which the second direct current source unit or the second inverter unit is located and the positive common direct current bus of the common direct current bus. Alternatively, the second fault protection apparatus is connected between a negative local bus of the branch on which the second direct current source unit or the second inverter unit is located and the negative common direct current bus of the common direct current bus. When the second fault protection apparatus includes the sixth port, the seventh port, the eighth port, and the ninth port, there may be the following several possible implementations in which the second fault protection apparatus is connected to the photovoltaic system.

In a possible implementation, an anode of the second diode is connected to the sixth port, a cathode of the second diode is connected to the eighth port, and the seventh port is connected to the ninth port.

In another possible implementation, an anode of the second diode is connected to the ninth port, a cathode of the second diode is connected to the seventh port, and the sixth port is connected to the eighth port.

In this way, the fault protection apparatus can be flexibly connected to meet different requirements, so as to protect the power system more comprehensively.

Optionally, to improve a capability of withstanding an overcurrent or a short-circuit current in the power system, the second diode may include a plurality of diodes connected in parallel.

Optionally, a third capacitor is connected in parallel between a positive common direct current bus and a negative common direct current bus that are connected to the branch on which the second fault protection apparatus is located. Alternatively, a fourth capacitor is connected in parallel between a positive local direct current bus and a negative local direct current bus of the branch on which the second fault protection apparatus is located. Alternatively, a third capacitor is connected in parallel between a positive common direct current bus and a negative common direct current bus that are connected to the branch on which the second fault protection apparatus is located, and a fourth capacitor is connected in parallel between a positive local direct current bus and a negative local direct current bus of the branch on which the second fault protection apparatus is located. When the second fault protection apparatus includes the sixth port, the seventh port, the eighth port, and the ninth terminal, a capacitor connection manner may be specifically as follows: A third capacitor is connected in parallel between the sixth port and the seventh port. Alternatively, a fourth capacitor is connected in parallel between the eighth port and the ninth port. Alternatively, a third capacitor is connected in parallel between the sixth port and the seventh port, and a fourth capacitor is connected in parallel between the eighth port and the ninth port. In this way, the capacitor is connected in parallel between the local buses, so that an inrush current of the fault protection apparatus during power-on can be reduced. The capacitor is connected in parallel between the common direct current buses, so that a surge current of the fault protection apparatus can be suppressed. This improves safety and reliability of the fault protection apparatus.

Optionally, the direct current source unit includes a direct current conversion unit and an energy storage unit. Alternatively, the direct current source unit includes a direct current conversion unit and a load unit. Alternatively, the direct current source unit includes an energy storage unit or a load unit. The system further includes a power grid. The other side of the first inverter unit is connected to the power grid.

Optionally, the second direct current source unit includes a direct current conversion unit and a load unit. Alternatively, the second direct current source unit includes a load unit. The system further includes a power grid. The other side of the second inverter unit is connected to the power grid.

It may be understood that the photovoltaic system may include only the first fault protection apparatus. Alternatively, when a branch that operates only when the common direct current bus supplies power to the branch exists in the photovoltaic system, the photovoltaic system includes both the first fault protection apparatus and the second fault protection apparatus based on an actual requirement. This is not specifically limited herein.

### BRIEF DESCRIPTION OF DRAWINGS

FIG. 1 is a schematic diagram of an example of a power system based on a common direct current bus;
FIG. 2 is a schematic diagram of performing fault protection by using a fuse in a power system based on a common direct current bus;
FIG. 3 is a schematic diagram of a structure of a photovoltaic system to which a fault protection apparatus is applied according to an embodiment of this application;
FIG. 4 is a schematic diagram of an example of a fault protection apparatus according to an embodiment of this application;
FIG. 5 is another schematic diagram of an example of a fault protection apparatus according to an embodiment of this application;
FIG. 6 is another schematic diagram of an example of a fault protection apparatus according to an embodiment of this application;
FIG. 7 is another schematic diagram of an example of a fault protection apparatus according to an embodiment of this application;
FIG. 8 is another schematic diagram of an example of a fault protection apparatus according to an embodiment of this application;
FIG. 9 is another schematic diagram of an example of a fault protection apparatus according to an embodiment of this application;
FIG. 10 is another schematic diagram of an example of a fault protection apparatus according to an embodiment of this application;
FIG. 11 is another schematic diagram of an example of a fault protection apparatus according to an embodiment of this application;
FIG. 12 is another schematic diagram of an example of a fault protection apparatus according to an embodiment of this application;
FIG. 13 is another schematic diagram of an example of a fault protection apparatus according to an embodiment of this application;
FIG. 14 is another schematic diagram of an example of a fault protection apparatus according to an embodiment of this application;
FIG. 15 is another schematic diagram of an example of a fault protection apparatus according to an embodiment of this application; and
FIG. 16 is another schematic diagram of an example of a fault protection apparatus according to an embodiment of this application.

### DESCRIPTION OF EMBODIMENTS

To make objectives, technical solutions, and advantages of this application clearer, the following describes embodiments of this application with reference to accompanying drawings. It is clear that the described embodiments are merely some rather than all of the embodiments of this application. Persons of ordinary skill in the art may learn that, as a new application scenario emerges, the technical solutions provided in embodiments of this application are also applicable to a similar technical problem.

In this specification, claims, and accompanying drawings of this application, the terms "first", "second", and so on are intended to distinguish between similar objects but do not necessarily indicate a specific order or sequence. It should be understood that data termed in such a way is interchangeable in proper circumstances, so that embodiments described herein can be implemented in other orders than the order illustrated or described herein. In addition, the terms "include" and "have" and any variations thereof are intended to cover non-exclusive inclusions, for example, a process, method, system, product, or device including a list of steps or modules is not necessarily limited to those modules, but may include other modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into units in this application is logical division and may be other division in an actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

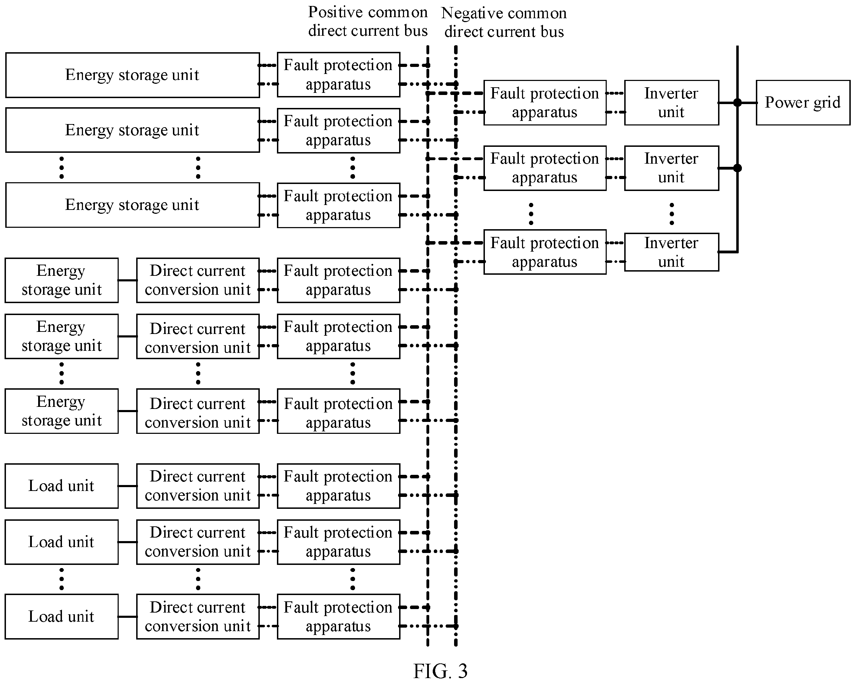

Embodiments of this application provide a fault protection apparatus applied to a power system based on a common direct current bus. A photovoltaic system based on the common direct current bus may be shown in FIG. 3. The photovoltaic system includes a plurality of branches, and the plurality of branches are separately connected to the common direct current bus. The branch includes a direct current source unit and a fault protection apparatus. Alternatively, the branch includes a power grid, an inverter unit, and a fault protection apparatus. It may be understood that the direct current source unit is an energy storage unit and a direct current conversion unit. Alternatively, the direct current source unit is a load unit and a direct current conversion unit. Alternatively, the direct current source unit is an energy storage unit or a load unit. As shown in FIG. 3, the branch includes the energy storage unit and the fault protection unit. Alternatively, the branch includes the energy storage unit, the direct current conversion unit, and the fault protection apparatus. Alternatively, the branch includes the load unit, the direct current conversion unit, and the fault protection apparatus. Alternatively, the branch includes the power grid, the inverter unit, and the fault protection apparatus. In this embodiment, when the fault protection apparatus includes a control unit, in a possible implementation, the control unit may be integrated with another component in the fault protection apparatus as a whole, and then each branch includes one control unit. In another possible implementation, the control unit may be an independent component, and then a plurality of branches may share one control unit. In the photovoltaic system shown in FIG. 3, the fault protection apparatus is located between each device on the branch and the common direct current bus, and is configured to connect each device on the branch and the common direct current bus, and disconnect the branch from the common direct current bus when a fault occurs in the photovoltaic system. In addition, in the photovoltaic system shown in FIG. 3, for example, each branch includes one control unit.

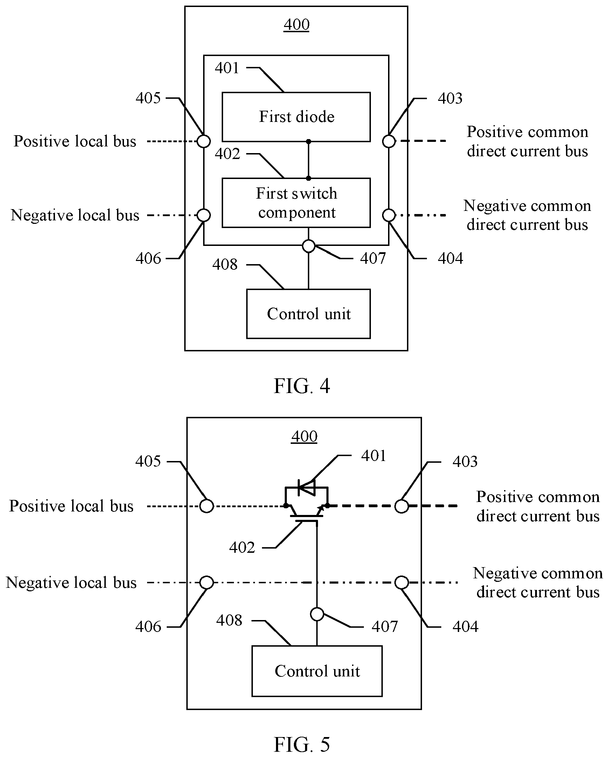

Based on the photovoltaic system shown in FIG. 3, in an example solution, a fault protection apparatus 400 may be shown in FIG. 4. The fault protection apparatus 400 includes a first diode 401, a first switch component 402, a first port 403, a second port 404, a third port 405, a fourth port 406, a fifth port 407, and a control unit 408. The first port 403 is connected to a positive common direct current bus of the common direct current bus. The second port 404 is connected to a negative common direct current bus of the common direct current bus. The third port 405 is connected to a positive local bus of a branch on which the fault protection apparatus 400 is located. The fourth port 406 is connected to a negative local bus of the branch on which the fault protection apparatus 400 is located. The first diode 401 and the first switch component 402 are connected to the photovoltaic system shown in FIG. 3 through the first port 403, the second port 404, the third port 405, and the fourth port 406. One side of the fifth port 407 is connected to a control terminal of the first switch component 402, and the other side of the fifth port is connected to the control unit 408. In this structure, the first diode 401 and the first switch component 402 meet the following functions: When a voltage between the third port 405 and the fourth port 406 is lower than a voltage between the first port 403 and the second port 404, the first diode 401 is forward conducted, and the common direct current bus supplies power to the branch. When a voltage between the third port 405 and the fourth port 406 is higher than a voltage between the first port 403 and the second port 404, and the fifth port 407 receives a drive signal (that is, a current is within a normal range), the first switch component 402 is forward conducted, the first diode 401 is reversely cut off, and the branch supplies power to the common direct current bus. When a voltage between the third port 405 and the fourth port 406 is higher than a voltage between the first port 403 and the second port 404, and the fifth port 407 does not receive a drive signal (that is, a current exceeds a normal range), the first diode 401 is reversely cut off, and the first switch component 402 is forward cut off, that is, the first diode 401 and the first switch component 402 disconnect a branch on which the first diode 401 and the first switch component 402 are located from the common direct current bus.

When the photovoltaic system normally runs, the fault protection apparatus 400 shown in FIG. 4 may implement bidirectional electric energy flow between the branch and the common direct current bus. When an overcurrent or a short circuit occurs in a branch, other normal branches are disconnected from the common direct current bus when respective currents exceed the normal range, to protect devices on the other normal branches. When an overcurrent or a short circuit occurs in the common direct current bus, all branches are disconnected from the common direct current bus, to protect all devices on the branches.

In an actual application, a specific structure of the first switch component 402 may be an IGBT or an MOSFET. The following uses an IGBT as an example to describe the fault protection apparatus 400 in this embodiment of this application. Specifically, as shown in FIG. 5, the fault protection apparatus 400 includes the first diode 401, an IGBT 402, the first port 403, the second port 404, the third port 405, the fourth port 406, the fifth port 407, and the control unit 408. One side of the first port 403 is connected to a positive common direct current bus of the common direct current bus, and the other side of the first port 403 is connected to an anode of the first diode 401 and an emitter of the IGBT 402. One side of the third port 405 is connected to a positive local bus of a branch on which the fault protection apparatus 400 is located, and the other side of the third port 405 is connected to a cathode of the first diode 401 and a collector of the IGBT 402. One side of the second port 404 is connected to a negative common direct current bus of the common direct current bus. One side of the fourth port 406 is connected to a negative local bus of the branch on which the fault protection apparatus 400 is located, and the other side of the second port 404 is connected to the other side of the fourth port 406, that is, the negative local bus is directly connected to the negative common direct current bus. One side of the fifth port 407 is connected to a control terminal of the IGBT 402, and the other side is connected to the control unit 408. In a running process, if a current of each branch in the photovoltaic system is within a normal range, the control unit 408 sends a drive signal to the fifth port 407. If a current of a branch in the photovoltaic system exceeds a normal range, the control unit 408 stops sending a corresponding drive signal to the branch. A control method of the fault protection apparatus 400 is as follows: When a voltage of the local bus is lower than a voltage of the common direct current bus, the first diode 401 is forward conducted. In this case, the common direct current bus supplies electric energy to the local bus. When a voltage of the local bus is higher than a voltage of the common direct current bus, and the fifth port 407 receives the drive signal sent by the control unit 408, the first diode 401 is reversely cut off, and the IGBT 402 is forward conducted. In this case, the local bus supplies electric energy to the common direct current bus. When a voltage of the local bus is higher than a voltage of the common direct current bus, and the fifth port 407 does not receive the drive signal sent by the control unit 408 (that is, the current of the branch exceeds the normal range), the first diode 401 is reversely cut off, and the IGBT 402 is forward cut off, so that the positive local bus of the branch on which the fault protection apparatus 400 is located is disconnected from the positive common direct current bus. It may be understood that, in this embodiment of this application, the normal current range may be zero to twice the rated current, or may be another preferred value. Details may be determined based on an actual situation, and are not limited herein.

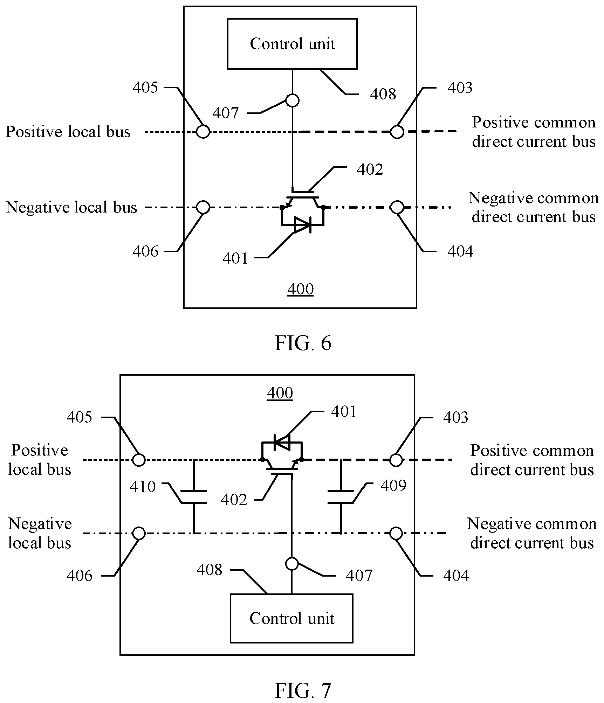

FIG. 5 shows an example structure of the fault protection apparatus 400 when the IGBT used as the first switch component 402 and the first diode 401 are connected between the positive local bus and the positive common direct current bus. The fault protection apparatus 400 may alternatively be connected between the negative local bus and the negative common direct current bus. Details are shown in FIG. 6.

The fault protection apparatus 400 includes the first diode 401, the IGBT 402, the first port 403, the second port 404, the third port 405, the fourth port 406, the fifth port 407, and the control unit 408. One side of the second port 404 is connected to a negative common direct current bus of the common direct current bus, and the other side of the second port 404 is connected to a cathode of the first diode 401 and a collector of the IGBT 402. One side of the fourth port 406 is connected to a negative local bus of a branch on which the fault protection apparatus 400 is located, and the other side of the fourth port 406 is connected to an anode of the first diode 401 and an emitter of the IGBT 402. One side of the first port 403 is connected to a positive common direct current bus of the common direct current bus. One side of the third port 405 is connected to a positive local bus of the branch on which the fault protection apparatus 400 is located, and the other side of the first port 403 is connected to the other side of the third port 405, that is, the positive local bus is directly connected to the positive common direct current bus. One side of the fifth port 407 is connected to a control terminal of the IGBT 402, and the other side of the fifth port is connected to the control unit 408. In a running process, if a current of each branch in the photovoltaic system is within a normal range, the control unit 408 sends a drive signal to the fifth port 407. If a current of a branch in the photovoltaic system exceeds a normal range, the control unit 408 stops sending a corresponding drive signal to the branch. A control method of the fault protection apparatus 400 is as follows: When a voltage of the local bus is lower than a voltage of the common direct current bus, the first diode 401 is forward conducted. In this case, the common direct current bus supplies electric energy to the local bus. When a voltage of the local bus is higher than a voltage of the common direct current bus, and the fifth port 407 receives the drive signal sent by the control unit 408, the first diode 401 is reversely cut off, and the IGBT 402 is forward conducted. In this case, the local bus supplies electric energy to the common direct current bus. When a voltage of the local bus is higher than a voltage of the common direct current bus, and the fifth port 407 does not receive the drive signal sent by the control unit 408 (that is, the current of the branch exceeds the normal range), the first diode 401 is reversely cut off, and the IGBT 402 is forward cut off, so that the negative local bus of the branch on which the fault protection apparatus 400 is located is disconnected from the negative common direct current bus. It may be understood that, in this embodiment of this application, the normal current range may be zero to twice the rated current, or may be another preferred value. Details may be determined based on an actual situation, and are not limited herein.

In this embodiment, when the MOSFET is used as a switch component, a specific connection manner and a function of the MOSFET are similar to those of the IGBT, and details are not described herein again. In addition, because the MOSFET has a body diode, the body diode may be used as the first diode, or used as a diode in the first diode.

In an actual application, to reduce an inrush current of the fault protection apparatus 400 during power-on or suppress a surge current of the fault protection apparatus 400, so as to improve safety and reliability of the fault protection apparatus 400, a capacitor may be further added to the fault protection apparatus 400. In an example solution, the fault protection apparatus 400 may be shown in FIG. 7.

The fault protection apparatus 400 further includes a first capacitor 409 and a second capacitor 410.

The first capacitor 409 is connected in parallel between the first port 403 and the second port 404. The second capacitor 410 is connected in parallel between the third port 405 and the fourth port 406.

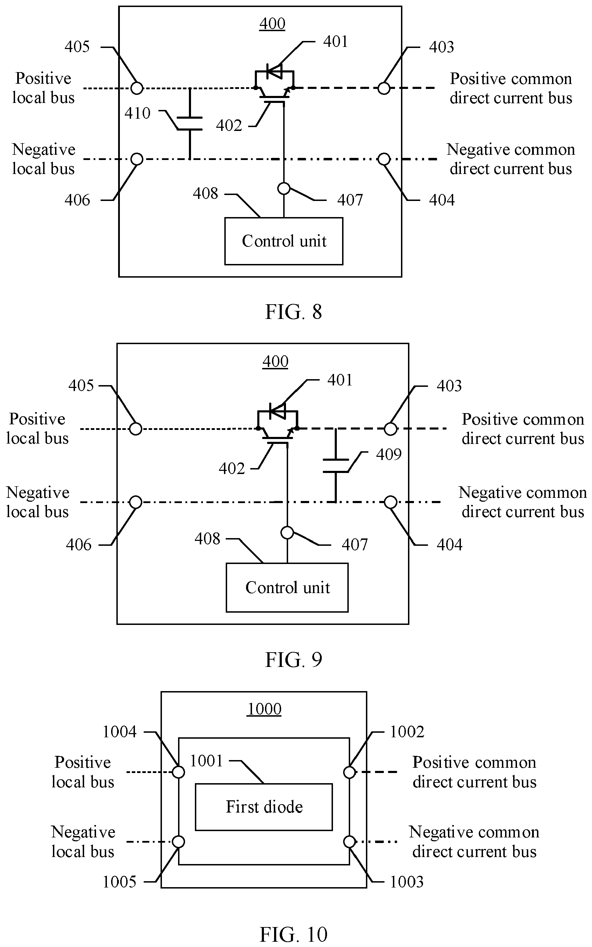

It may be understood that, in this embodiment of this application, the fault protection apparatus 400 may be shown in FIG. 7. Capacitors may be respectively added between the local buses and between the common direct current buses, or a capacitor may be added only between the local buses, as shown in FIG. 8. Alternatively, a capacitor may be added only between the common direct current buses, as shown in FIG. 9. A specific situation is not limited herein.

In this embodiment, based on the photovoltaic system shown in FIG. 3, when an operating status of the branch in the photovoltaic system is that only a common direct current bus supplies power to the branch (that is, the branch includes the load unit, the direct current conversion unit, and the fault protection apparatus; or the branch includes the power grid, the inverter unit, and the fault protection apparatus), the fault protection apparatus may further include a structure shown in FIG. 10. A fault protection apparatus 1000 includes a second diode 1001, a sixth port 1002, a seventh port 1003, an eighth port 1004, and a ninth port 1005. The sixth port 1002 is connected to a positive common direct current bus of the common direct current bus. The seventh port 1003 is connected to a negative common direct current bus of the common direct current bus. The eighth port 1004 is connected to a positive local bus of a branch on which the fault protection apparatus 1000 is located. The ninth port 1005 is connected to a negative local bus of the branch on which the fault protection apparatus 1000 is located. The second diode 1001 is connected to the photovoltaic system shown in FIG. 3 through the sixth port 1002, the seventh port 1003, the eighth port 1004, and the ninth port 1005. In this structure, the second diode 1001 meets the following function: When a voltage between the eighth port 1004 and the ninth port 1005 is lower than a voltage between the sixth port 1002 and the seventh port 1003, the second diode 1001 is forward conducted, and the common direct current bus supplies power to the branch. When an overcurrent or a short circuit occurs in a branch in the photovoltaic system, on another normal branch included in the fault protection apparatus 1000 shown in FIG. 10 in the photovoltaic system, the second diode 1001 is reversely cut off, to block the branch on which the fault protection apparatus 1000 is located from supplying a current to the common direct current bus, so as to protect a device on the branch on which the fault protection apparatus 1000 is located. Similarly, when an overcurrent or a short circuit occurs in the common direct current bus of the photovoltaic system, on another branch included in the fault protection apparatus 1000 shown in FIG. 10 in the photovoltaic system, the second diode 1001 is reversely cut off, to block the branch on which the fault protection apparatus 1000 is located from supplying a current to the common direct current bus, so as to protect a device on the branch on which the fault protection apparatus 1000 is located. That is, the fault protection apparatus 1000 shown in FIG. 10 may be used for a branch to which only the common direct current bus supplies electric energy. In this way, a function of supplying power to the common direct current bus by the branch does not need to be considered, and only a diode is used to implement current cutoff. A branch in a specific application may be a branch that is connected to the load unit and that is shown in FIG. 3, or a branch that is connected to the power grid and that only supplies electric energy to the power grid.

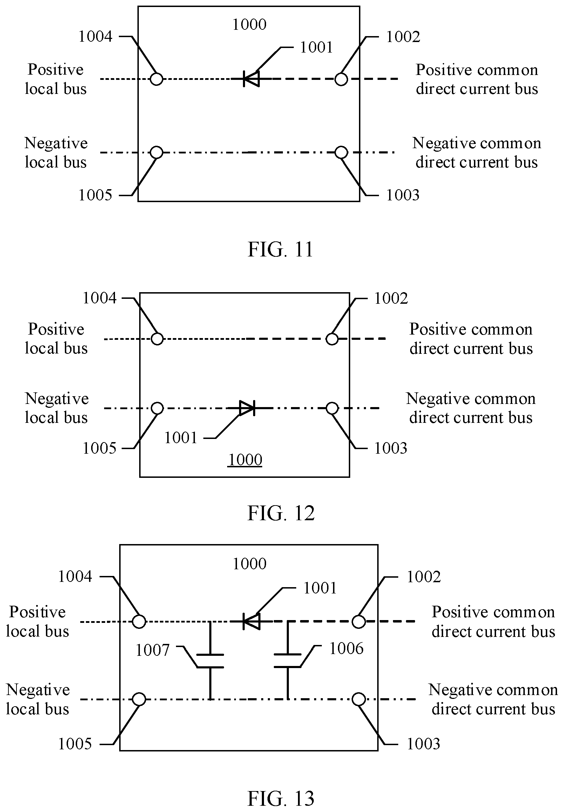

In this embodiment, a specific structure of the fault protection apparatus 1000 may be separately shown in FIG. 11 and FIG. 12.

As shown in FIG. 11, the second diode 1001 is connected between a positive common direct current bus and a positive local bus. One side of the sixth port 1002 is connected to the positive common direct current bus, and the other side of the sixth port 1002 is connected to an anode of the second diode 1001. One side of the eighth port 1004 is connected to the positive local bus, and the other side of the eighth port 1004 is connected to a cathode of the second diode 1001. One side of the seventh port 1003 is connected to a negative common direct current bus. One side of the ninth port 1005 is connected to a negative local bus. The other side of the seventh port 1003 is connected to the other side of the ninth port 1005, that is, the negative local bus is directly connected to the negative common direct current bus.

As shown in FIG. 12, the second diode 1001 is connected between a negative common direct current bus and a negative local bus. One side of the seventh port 1003 is connected to the negative common direct current bus, and the other side of the seventh port is connected to a cathode of the second diode 1001. One side of the ninth port 1005 is connected to the negative local bus, and the other side of the ninth port is connected to an anode of the second diode 1001. One side of the sixth port 1002 is connected to a positive common direct current bus. One side of the eighth port 1004 is connected to a positive local bus. The other side of the sixth port 1002 is connected to the other side of the eighth port 1004, that is, the positive common direct current bus is directly connected to the positive local bus.

In an actual application, to reduce an inrush current of the fault protection apparatus 1000 during power-on or suppress a surge current of the fault protection apparatus 1000, so as to improve safety and reliability of the fault protection apparatus 1000, a capacitor may be further added to the fault protection apparatus 1000. In an example solution, the fault protection apparatus 1000 may be shown in FIG. 13.

The fault protection apparatus 1000 further includes a third capacitor 1006 and a fourth capacitor 1007.

The third capacitor 1006 is connected in parallel between the sixth port 1002 and the seventh port 1003. The fourth capacitor 1007 is connected in parallel between the eighth port 1004 and the ninth port 1005.

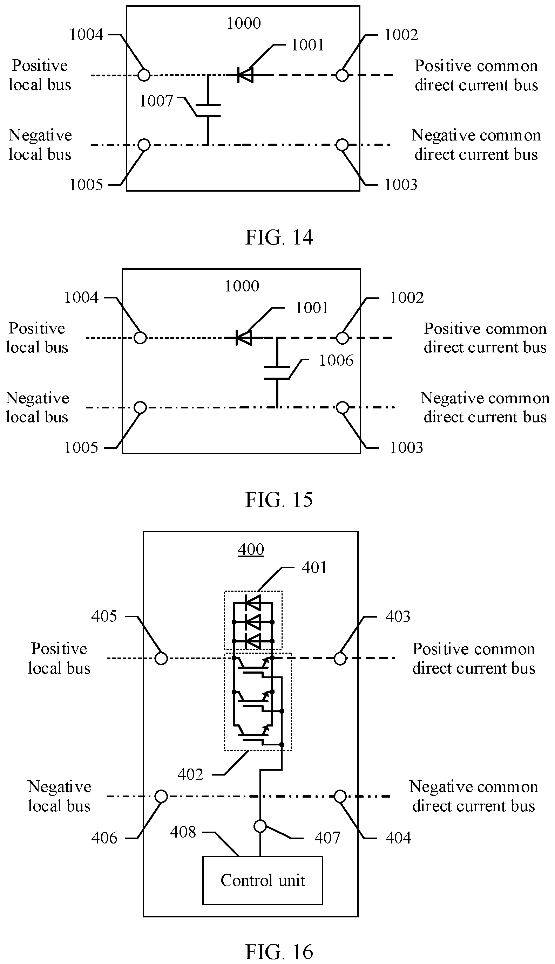

It may be understood that, in this embodiment of this application, the fault protection apparatus 1000 may be shown in FIG. 13. Capacitors may be respectively added between the local buses and between the common direct current buses, or a bus may be added only between the local buses, as shown in FIG. 14. Alternatively, a capacitor may be added only between the common direct current buses, as shown in FIG. 15. A specific situation is not limited herein.

In this embodiment, in the fault protection apparatus shown in any one of FIG. 4 to FIG. 15, the diode may include a plurality of diodes, and the plurality of diodes are combined in parallel. If the fault protection apparatus includes a switch component, the switch component may also include a plurality of switch components, and the plurality of switch components are combined in parallel. As shown in FIG. 16, descriptions are provided by using an example in which a first diode and the first switch component are IGBTs. A plurality of IGBTs are connected in parallel to form the first switch component 402. A plurality of diodes are connected in parallel to form the first diode 401.

In embodiments of this application, the photovoltaic system shown in FIG. 3 includes the fault protection apparatus shown in any one of FIG. 4 to FIG. 9 and FIG. 16. Alternatively, the photovoltaic system shown in FIG. 3 includes the fault protection apparatus shown in any one of FIG. 4 to FIG. 9 and FIG. 16 and the fault protection apparatus shown in any one of FIG. 10 to FIG. 15. The fault protection apparatus shown in any one of FIG. 10 to FIG. 15 is only used for a branch whose operating status is that the common direct current bus supplies power to the branch.

It may be clearly understood by persons skilled in the art that, for ease and brevity of description, for a detailed working process of foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A fault protection apparatus, applied to a photovoltaic system based on a common direct current bus, and comprising:
a first diode, a first switch component, a control unit, a first port, a second port, a third port, a fourth port, and a fifth port, wherein
the first port is connected to a positive common direct current bus of the common direct current bus, the second port is connected to a negative common direct current bus of the common direct current bus, the third port is connected to a positive local bus of a branch on which the fault protection apparatus is located, the fourth port is connected to a negative local bus of the branch on which the fault protection apparatus is located, and one side of the fifth port is connected to a control terminal of the first switch component;
the first diode and the first switch component are connected to a power system through the first port, the second port, the third port, and the fourth port;
the other side of the fifth port is connected to the control unit, and the control unit sends a drive signal to control the first switch component; and
when a voltage between the third port and the fourth port is lower than a voltage between the first port and the second port, the first diode is forward conducted; or when a voltage between the third port and the fourth port is higher than a voltage between the first port and the second port, and the fifth port receives the drive signal, the first switch component is forward conducted; or when a voltage between the third port and the fourth port is higher than a voltage between the first port and the second port, and the fifth port does not receive the drive signal, the first diode is reversely cut off, and the first switch component is forward cut off.

2. The apparatus according to claim 1, wherein the first diode comprises a plurality of diodes, and the plurality of diodes are connected in parallel; and
the first switch component comprises a plurality of switch components, and the plurality of switch components are connected in parallel.

3. The apparatus according to claim 1 or 2, wherein the first switch component is an insulated gate bipolar transistor IGBT or a metal-oxide-semiconductor field-effect transistor MOSFET.

4. The apparatus according to claim 3, wherein when the first switch component is the MOSFET, a body diode in the MOSFET is the first diode, or a body diode is a diode in the first diode.

5. The apparatus according to claim 3 or 4, wherein an anode of the first diode is connected to the first port, a cathode of the first diode is connected to the third port, an emitter of the IGBT or a source of the MOSFET is connected to the first port, a collector of the IGBT or a drain of the MOSFET is connected to the third port, and the second port is connected to the fourth port; or
a cathode of the first diode is connected to the second port, an anode of the first diode is connected to the fourth port, a collector of the IGBT or a drain of the MOSFET is connected to the second port, an emitter of the IGBT or a source of the MOSFET is connected to the fourth port, and the first port is connected to the third port.

6. The apparatus according to any one of claims 1 to 5, wherein a first capacitor is connected in parallel between the first port and the second port; or
a second capacitor is connected in parallel between the third port and the fourth port; or
a first capacitor is connected in parallel between the first port and the second port, and a second capacitor is connected in parallel between the third port and the fourth port.

7. A fault protection apparatus, applied to a photovoltaic system based on a common direct current bus, and comprising:
a second diode, a sixth port, a seventh port, an eighth port, and a ninth port, wherein
the sixth port is connected to a positive common direct current bus of the common direct current bus, the seventh port is connected to a negative common direct current bus of the common direct current bus, the eighth port is connected to a positive local bus of a branch on which the fault protection apparatus is located, and the ninth port is connected to a negative local bus of the branch on which the fault protection apparatus is located;
the second diode is connected to a power system through the sixth port, the seventh port, the eighth port, and the ninth port; and
when a voltage between the eighth port and the ninth port is lower than a voltage between the sixth port and the seventh port, the second diode is forward conducted; or when a voltage between the eighth port and the ninth port is higher than a voltage between the sixth port and the seventh port, the second diode is reversely cut off.

8. The apparatus according to claim 7, wherein the second diode comprises a plurality of diodes, and the plurality of diodes are connected in parallel.

9. The apparatus according to claim 7 or 8, wherein an anode of the second diode is connected to the sixth port, a cathode of the second diode is connected to the eighth port, and the seventh port is connected to the ninth port; or
a cathode of the second diode is connected to the seventh port, an anode of the second diode is connected to the ninth port, and the sixth port is connected to the eighth port.

10. The apparatus according to any one of claims 7 to 9, wherein a third capacitor is connected in parallel between the sixth port and the seventh port; or
a fourth capacitor is connected in parallel between the eighth port and the ninth port; or
a third capacitor is connected in parallel between the sixth port and the seventh port, and a fourth capacitor is connected in parallel between the eighth port and the ninth port.

11. A photovoltaic system, comprising:
a common direct current bus, a plurality of first fault protection apparatuses, a plurality of first direct current source units, and a plurality of first inverter units, wherein
a branch on which the first direct current source unit or the first inverter unit is located is connected to the common direct current bus by using the first fault protection apparatus;
the first fault protection apparatus comprises a first diode, a first switch component, and a control unit; and
when the first diode is forward conducted, the common direct current bus supplies power to the branch; and when the control unit controls the first switch component to be forward conducted, the branch supplies energy to the common direct current bus; or when the first diode is reversely cut off, and the control unit controls the first switch component to be forward cut off, the branch is disconnected from the common direct current bus.

12. The system according to claim 11, wherein the first diode comprises a plurality of diodes, and the plurality of diodes are connected in parallel; and
the first switch component comprises a plurality of switch components, and the plurality of switch components are connected in parallel.

13. The system according to claim 11 or 12, wherein the first switch component is an insulated gate bipolar transistor IGBT or a metal-oxide-semiconductor field-effect transistor MOSFET.

14. The system according to claim 13, wherein when the first switch component is the MOSFET, a body diode in the MOSFET is the first diode, or a body diode is a diode in the first diode.

15. The system according to claims 11 to 14, wherein the first fault protection apparatus is connected between a positive local bus of the branch on which the first direct current source unit or the first inverter unit is located and a positive common direct current bus of the common direct current bus; or
the first fault protection apparatus is connected between a negative local bus of the branch on which the first direct current source unit or the first inverter unit is located and a negative common direct current bus of the common direct current bus.

16. The system according to claim 15, wherein the first fault protection apparatus further comprises a first port, a second port, a third port, a fourth port, and a fifth port, wherein one side of the first port is connected to the positive common direct current bus of the common direct current bus, the second port is connected to the negative common direct current bus of the common direct current bus, one side of the third port is connected to a positive local bus of a branch on which the fault protection apparatus is located, the fourth port is connected to a negative local bus of the branch on which the fault protection apparatus is located, one side of the fifth port is connected to a control terminal of the first switch component, and the other side of the fifth port is connected to the control unit; and
when the first switch component is the insulated gate bipolar transistor IGBT or the metal-oxide semiconductor field-effect transistor MOSFET, an anode of the first diode is connected to the first port, a cathode of the first diode is connected to the third port, an emitter of the IGBT or a source of the MOSFET is connected to the first port, a collector of the IGBT or a drain of the MOSFET is connected to the third port, and the second port is connected to the fourth port; or
when the first switch component is the insulated gate bipolar transistor IGBT or the metal-oxide semiconductor field-effect transistor MOSFET, a cathode of the first diode is connected to the second port, an anode of the first diode is connected to the fourth port, a collector of the IGBT or a drain of the MOSFET is connected to the second port, an emitter of the IGBT or a source of the MOSFET is connected to the fourth port, and the first port is connected to the third port.

17. The system according to any one of claims 11 to 16, wherein the system further comprises a plurality of second fault protection apparatuses, a plurality of second direct current source units, and a plurality of second inverter units, wherein the second fault protection apparatus comprises a second diode;
a branch on which the second direct current source unit is located or a branch on which the second inverter unit is located is connected to the common direct current bus by using the second fault protection apparatus; and
when the second diode is forward conducted, the common direct current bus supplies power to the branch; or when the second diode is reversely cut off, a branch on which the second diode is located is disconnected from the common direct current bus.

18. The system according to claim 17, wherein the second diode comprises a plurality of diodes, and the plurality of diodes are connected in parallel.

19. The system according to claim 16 or 17, wherein the second fault protection apparatus is connected between a positive local bus of the branch on which the second direct current source unit or the second inverter unit is located and the positive common direct current bus of the common direct current bus; or
the second fault protection apparatus is connected between a negative local bus of the branch on which the second direct current source unit or the second inverter unit is located and the negative common direct current bus of the common direct current bus.

20. The system according to claim 19, wherein the second fault protection apparatus further comprises a sixth port, a seventh port, an eighth port, and a ninth port, wherein the sixth port is connected to the positive common direct current bus of the common direct current bus, the seventh port is connected to the negative common direct current bus of the common direct current bus, the eighth port is connected to a positive local bus of a branch on which the second fault protection apparatus is located, and the ninth port is connected to a negative local bus of the branch on which the second fault protection apparatus is located; and
an anode of the second diode is connected to the sixth port, a cathode of the second diode is connected to the eighth port, and the seventh port is connected to the ninth port; or
a cathode of the second diode is connected to the seventh port, an anode of the second diode is connected to the ninth port, and the sixth port is connected to the eighth port.

21. The system according to any one of claims 11 to 20, wherein a first capacitor is connected in parallel between a positive common direct current bus and a negative common direct current bus that are connected to a branch on which the first fault protection apparatus is located; or
a second capacitor is connected in parallel between a positive local direct current bus and a negative local direct current bus of a branch on which the first fault protection apparatus is located; or
a first capacitor is connected in parallel between a positive common direct current bus and a negative common direct current bus that are connected to a branch on which the first fault protection apparatus is located, and a second capacitor is connected in parallel between a positive local direct current bus and a negative local direct current bus of the branch on which the first fault protection apparatus is located.

22. The system according to any one of claims 17 to 21, wherein a third capacitor is connected in parallel between a positive common direct current bus and a negative common direct current bus that are connected to the branch on which the second fault protection apparatus is located; or
a fourth capacitor is connected in parallel between a positive local direct current bus and a negative local direct current bus of the branch on which the second fault protection apparatus is located; or
a third capacitor is connected in parallel between a positive common direct current bus and a negative common direct current bus that are connected to the branch on which the second fault protection apparatus is located, and a fourth capacitor is connected in parallel between a positive local direct current bus and a negative local direct current bus of the branch on which the second fault protection apparatus is located.

23. The system according to any one of claims 11 to 22, wherein the direct current source unit comprises a direct current conversion unit and an energy storage unit; or
the direct current source unit comprises a direct current conversion unit and a load unit; or
the direct current source unit comprises an energy storage unit or a load unit;
the system further comprises a power grid; and
the other side of the first inverter unit is connected to the power grid.

24. The system according to any one of claims 17 to 23, wherein
the second direct current source unit comprises a direct current conversion unit and a load unit; or
the second direct current source unit comprises a load unit;
the system further comprises a power grid; and
the other side of the second inverter unit is connected to the power grid.
